(19) Europäisches Patentamt
European Patent Office
Office européen des brevets

(11) **EP 2 059 050 A1**

(12) **EUROPEAN PATENT APPLICATION**

(43) Date of publication:
**13.05.2009 Bulletin 2009/20**

(51) Int Cl.:
**H04N 7/26** (2006.01)

(21) Application number: **07301520.8**

(22) Date of filing: **31.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Zhu, Li Hua**
**100085 Beijing (CN)**

• **Xu, Long**
**100085 Beijing (CN)**
• **Yang, Libo**
**100085 Beijing (CN)**

(74) Representative: **Rittner, Karsten**
**Deutsche Thomson OHG**
**European Patent Operations**
**Karl-Wiechert-Allee 74**
**30625 Hannover (DE)**

(54) **Method for coding a subsequent sequence of pictures by help of a preceding sequence of pictures**

(57)    The invention is related to a method and an encoder for coding a subsequent sequence of pictures (GOP) by help of a preceding sequence of pictures (GOP).

Said method comprises the step of determining picture dependent coding parameters from coding of the pictures in the preceding group (GOP). The method further comprises the step of determining complexities by help of the determined coding parameters. As well, the method comprises the step of updating enhanced level weighting factors by help of the determined complexities and the step of coding of pictures of the subsequent group (GOP) by help of the updated enhanced level weighting factors.

By updating the enhanced level weighting factors by help of the complexities coding performance is improved and smoothing of quality transition from a preceding group of pictures (GOP) to a subsequent group of pictures (GOP) is achieved.

EP 2 059 050 A1

**Description**

Background

The invention is related to a method and an encoder for coding sequences of pictures. More precisely, the invention is related to coding a subsequent sequence of pictures by help of a preceding sequence of pictures.

Scalable video coding (SVC) is an extension of the ITU-T Recommendation H.264 | ISO/IEC International Standard ISO/IEC 14496-10 advanced video. SVC provides the attractive attribute of scalability such as, for instance, spatial scalability, temporal scalability or signal-to-noise-ratio scalability.

To achieve spatial scalability, according to SVC a group of pictures is divided into two or more spatial levels. Similarly, for achieving temporal scalability a group of pictures is divided into two or more temporal levels. A base level comprises key frames which allow for decoding independent from other frames. Key frames are either intra coded frames (I-frames) which are decodable independently from any other picture or predictive frames (P-frames) which rely on the last key frame for decoding.

In order to improve temporal or spatial quality, e.g. by an increased frame rate or an improved resolution, one or more enhanced levels comprise bidirectional coded frames (B-frames). In the case of temporal scalability, these B-frames are temporarily located in between two key frames of the base level. For decoding B-frames in an enhanced temporal level, the frames of the next lower temporal level are required wherein the base level forms the lowest temporal level.

The frames of all enhanced temporal levels which are temporarily located in between two key frames form together with one of said key frames a group of pictures (GOP). Within the framework of temporal scalability, I/P-frames are also referred to as low pass sub-bands and B-frames are referred to as high pass sub-bands.

When being faced with limited bandwidth, for instance in relation to transmission, there is a need for spreading the available bandwidth over the different levels.

It is common practice to multiply sub-bands by a weighting factor which may vary between sub-bands. The weighting factors indicate the amount of bits allocated to coefficients of the sub-bands. The weighting factors are calculated for each GOP based on properties of the unprocessed frames in the GOP.

But, said practice may result in sudden quality changes between groups of pictures. Furthermore, there is a continuing need for exploiting the available bandwidth more efficiently.

Invention

The inventors recognized that scaling factor calculation based on properties of unprocessed frames does not take into account coding effects which may result in sub-optimal coding. Furthermore, the inventors realized that the common practice can lead to sudden quality changes between two GOPs. Therefore, they challenged the task of improving and smoothing encoding performance.

This is achieved by a method for coding a subsequent sequence of pictures by help of a preceding sequence of pictures, wherein each picture either belong to a base level or to one of one or more enhanced levels, the method comprising the features of claim 1.

Said method comprises the step of determining picture dependent coding parameters from coding of the pictures in the preceding group. The method further comprises the step of determining two or more complexities by help of the determined coding parameters. As well, the method comprises the step of updating enhanced level weighting factors by help of the determined complexities and the step of coding of pictures of the subsequent group by help of the updated enhanced level weighting factors.

By updating the enhanced level weighting factors for coding of a next picture group by help of the complexities determined from encoding of a previous picture group coding performance is improved and smoothing of quality transition from a preceding GOP to a subsequent GOP is achieved.

It is preferred, that determining complexities comprises determining a base complexity by help of the coding parameters depending on base level pictures and determining one or more enhanced complexities by help of the coding parameters depending on enhanced level pictures, and that pictures of the enhanced levels in the subsequent group are coded by help of the updated enhanced level weighting factors.

In another preferred embodiment, the picture dependent coding parameters comprise the number of bits and the quantization step size used for coding of the picture and the coding of pictures by help of the updated enhanced level weighting factors comprises allocating bits.

Using the enhanced level weighting factors for bit allocation allow for efficient bandwidth exploitation.

Preferably, the step of determining the enhanced complexities and the base complexity comprises averaging the product of the picture dependent coding parameters over the coded base level pictures and, for each enhanced level, averaging the product of the picture dependent coding parameters over the coded pictures of the respective enhanced level.

This smoothes picture quality changes even more.

In yet another preferred embodiment the step of updating a enhanced level weighting factor comprises scaling a predetermined value by the quotient of the respective enhanced complexity and the base complexity.

Sometimes, pictures are determined to be either bidirectional coded or intra/predictive coded wherein pictures which are to be coded intra/predictive are coded with common intra/predictive coding parameters. Then, the method preferably further comprises determining an intra/predictive complexity, determining a generalized quantization parameter and determining an intra/predictive weighting factor by help of an intra/predictive quantization parameter and the generalized quantization parameter, determining an intra/predictive scaling factor by help of the intra/predictive complexity and the base complexity, and scaling the intra/predictive weighting factor by the intra/predictive scaling factor.

In even another preferred embodiment the intra/predictive quantization parameter corresponds to the quantization step size used for coding. Then, the step of determining the intra/predictive complexity comprises multiplying the common intra/predictive coding parameters and the step of determining the generalized quantization parameter comprises averaging over all coded pictures the quantization parameters used. This allows for determining the intra/predictive scaling factor by dividing the intra/predictive complexity by the base complexity.

It is further preferred if determining the generalized quantization parameter comprises diminishing it by a value which depends on the number of enhanced levels and determining the intra/predictive weighting factor comprises limiting its value range to the range from 2 to 10.

The invention is further related to an encoder comprising the features of claim 9.

Preferred embodiments of the inventive encoder further comprise the features of claim 10 and/or claim 11.

Drawings

An exemplary embodiment of the invention is explained in more detail in the following description by help of the drawing.

In the figures:

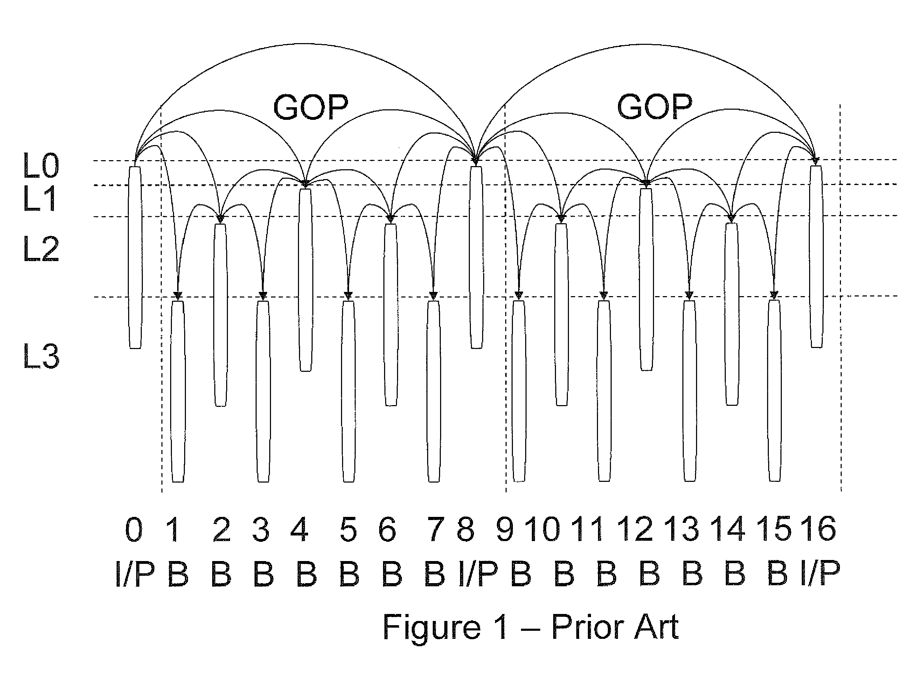

Fig. 1    exemplarily depicts temporal decomposition of a sequence of pictures into a base level and three enhanced temporal levels

Exemplary embodiment

The inventive method is exemplarily explained in the framework of temporal scalability. But, it may be applied similarly in the framework of spatial or SNR scalability.

Figure 1 exemplarily depicts temporal decomposition of a sequence of 16 pictures into a base level L0 and three enhanced temporal levels L1, L2 and L3 as known from prior art. The sequence is further decomposed into two equally sized groups of pictures GOP. To each picture there corresponds a number reflecting the pictures position in the order of the sequence. Each picture is further indicated to be either I/P or B. Each group of pictures GOP comprises a base level picture which is an I/P picture which is also referred to as the key frame of the groups of pictures GOP. Each group of pictures GOP further comprises several B pictures. Due to vertical arrangement of levels in the picture, the B pictures form a pyramid. That is, in the given example there is one B-picture in the first temporal level L1, two B-pictures in the second temporal level L2 and four b-pictures in the third temporal level L3.

As indicated by arrows in figure 1, encoding of the B-picture in the first temporal level L1 is done by help of the key frame of the current group of pictures GOP and the key frame of the preceding group of pictures GOP. Encoding of the B-picture in the second temporal level L2 is done by help of a key frame, either from the current group of pictures GOP or from the preceding group of pictures GOP, and by help of the B-pictures of the first temporal level L1.

After temporal decomposition of a group of pictures GOP, a low-pass sub-band (I/P) and some high pass sub-bands (hierarchical B pictures) which are located in the different enhanced temporal levels, are obtained. Due to the hierarchical coding structure, the contribution of frames in the higher temporal level for the whole coding performance is bigger than that of in the lower temporal level.

Assuming that the frame rate is F, the GOP size is $N$, and the number of target video bits per second is B, the numbers of averaged target bits per GOP is

$$T^{GOP} = \frac{N}{F} B \qquad (1)$$

Assuming that the number of accumulated left bits by the previous GOPs before encoding the current GOP is $R_{Left}^{GOP}$ . This number might be negative. Then the initial number of bits assigned to the current GOP would be

$$T_{Cur}^{GOP} = T^{GOP} + R_{Left}^{GOP} \qquad (2)$$

The target bit rate, i.e. the number of bits allocated for a picture with individual picture type is based on the remaining bits of current GOP and the weighting factor of each picture type:

$$T_l^b (j) = \frac{T_{Cur}^{GOP} - \sum_{i=0}^{l-1} \sum_{k=0}^{N(i)} B_i(k) - \sum_{k=0}^{j-1} B_i(k)}{N(l) - j + 1 + \sum_{i=l}^{d-1} \frac{\omega_i}{\omega_l} \times N(i)} \qquad (3)$$

$$T^{I/P}(0) = \frac{T_{Cur}^{GOP}}{N_{I/P} + \sum_{i=0}^{d-1} \frac{\omega_i}{\omega_{I/P}} \times N(i)} \qquad (4)$$

Here, $\omega_{I/P}$ is the weighting factor for I/P pictures and $\omega_i$ is the weighting factor for B-pictures in the ith temporal level. $T_l^b (j)$ is the number of bits allocated for coding the jth picture which is a B-picture in the *1*th level. **$T^{I/P}$(0)** is the number of bits allocated for coding an I/P-picture and *d* is the number of decomposition stages in the temporal domain, i.e. the number of temporal levels. **$N_{I/P}$** is the number of picture with picture type I or P, **$N(i)$** is the number of pictures in the ith enhanced temporal level, **$B_i(k)$** is the number of bits consumed or used for coding the *k*th sub-band in the *l*th level.

After a GOP is coded, the weighting factors are updated using the amounts of bits consumed for coding pictures in said coded GOP. In this embodiment, a set of updated weighting factors is computed using parameters which depend on the encoding of single pictures by help of its picture type and its temporal level. That is, the weighting factors are regulated dynamically for more efficient bit allocation. The initial weighting factors can be deduced from the temporal decomposition structure according to the reference order and the contribution for peak-signal-to-noise-ratio gains (PSNR gains).

After coding a GOP, the consumed bits and a quantization step size Qstep used for coding of each picture can be obtained. Then, the average complexity of enhanced temporal level *l* is determined as follows:

$$C_{avg}(l) = \frac{\sum_{i=0}^{N(l)} B_l(i) \times QStep_l(i)}{N(l)} \qquad (5)$$

where d is the total number of temporal levels in a GOP, and *l* refers to the lth temporal level of the pyramid structure. The top level is defined as *l* = 0, and the lowest level, which is the base level, is defined as *l* = d.

$QStep_l(i)$ is the actual quantization step size used for coding of the ith sub-band in the lth level.

$N(l)$ is the number of sub-bands in lth hierarchical level:

$$N(l) = \begin{cases} 2^{d-l-1} & l < d; \\ 1 & l = d; \end{cases} \tag{6}$$

The average complexity of the lowest level of hierarchical B pictures forms a benchmark, and its weighting factor $\omega_0$ is set to 1. For the other level in the hierarchical B pictures, the weighting factor $\omega_l$ can be updated as follows:

$$\omega_l = \frac{ScaleTable[l] \times C_{avg}(l)}{C_{avg}(0)} \tag{7}$$

wherein

$$ScaleTable[] = \{1.000, 1.216, 1.478, 1.794, 2.171, 2.611, 3.109, 3.646......\} \tag{8}$$

From the above formula, one can see that the low-pass sub-bands assigned with the larger weighting factor than sub-bands of the higher temporal level, and the weighting factor of high-pass sub-bands in the different level decrease with the increasing frequency of the temporal sub-bands.

Similarly, the bit-scaling factor of low-pass sub-band (I or P frames) $\omega_{I/P}$ is updated as follows:

$$\omega_{I/p} = \frac{\Delta_{I/P} \times B_{I/P} \times Qstep_{I/P}}{C_{avg}(0)} \tag{9}$$

wherein

$$\Delta_{I/P} = \min(10, \max(2, \Delta)) \tag{10}$$

with

$$\Delta = pow(2, (QP_{I/P} - \overline{QP})/3) \tag{11}$$

and

$$\overline{QP} = \frac{QP_{I/P} + \sum_{l=1}^{d-1} \sum_{i=0}^{N(l)} \left( QP_l(i) - QTable[l] \right)}{N_{I/P} + \sum_{j=0}^{d-1} N(j)} \qquad (12)$$

as well as

$$QTable[] = \{2,3,4,6,7,...\} \qquad (13)$$

The actual number of bits used for coding the low-pass sub-band (I or P picture) is $B_{I/P}$ and $QP_{I/P}$ is the actual quantization parameter (QP) used for coding the low-pass sub-band (I or P picture) $\Delta_{I/P}$ is a measure of a difference between the QP of low-pass sub-band (I/P) and the average QP of the last coded GOP which can be served as a factor for regulating the weighting factor of I/P frames. *QTable* is derived according to the quantization parameter scaling strategy of SVC. $QP_l(i)$ is the QP actually used for coding each frame of the last coded GOP .

After a GOP is coded, the set of weighting factors is updated for the bit allocation of next GOP.

**Claims**

1.  Method for encoding a subsequent sequence of pictures by help of a preceding sequence of pictures, wherein pictures either belong to a base level or to one of one or more enhanced levels, the method comprising

    - determining picture dependent coding parameters from coding of the pictures in the preceding group,
    - determining by help of the coding parameters two or more complexities,
    - updating enhanced level weighting factors by help of the determined complexities,
    - coding pictures of the subsequent group of pictures by help of the updated enhanced level weighting factors.

2.  Method according to claim 1, **characterized in that**

    - determining two or more complexities comprises determining a base complexity by help of the coding parameters depending on base level pictures and determining one or more enhanced complexities by help of the coding parameters depending on enhanced level pictures, and
    - pictures of the enhanced temporal levels in the subsequent group are coded by help of the updated enhanced level weighting factors.

3.  Method according to claim 2, **characterized in that**

    - the picture dependent coding parameters comprise the number of bits and the quantization step size used for coding of the picture and
    - the coding of pictures by help of the updated enhanced level weighting factors comprises allocating bits.

4.  Method according to claim 3, **characterized in that** determining the enhanced complexities and the base complexity comprises

    - averaging the product of the picture dependent coding parameters over the coded base level pictures and
    - for each enhanced level, averaging the product of the picture dependent coding parameters over the coded pictures of the respective enhanced level.

5.  Method according to any preceding claim, **characterized in that**

    - updating the enhanced level weighting factor comprises scaling a predetermined value by the quotient of the respective enhanced complexity and the base complexity.

6. Method according to any preceding claim, wherein

- pictures are determined to be either bidirectional coded or intra/predictive coded,
- pictures which are to be coded intra/predictive are coded with common intra/predictive coding parameters, the method further comprising:
- determining an intra/predictive complexity,
- determining a generalized quantization parameter,
- determining an intra/predictive weighting factor by help of an intra/predictive quantization parameter and the generalized quantization parameter,
- determining an intra/predictive scaling factor by help of the intra/predictive complexity and the base complexity,
- scaling the intra/predictive weighting factor by the intra/predictive scaling factor.

7. Method according to claim 6, wherein

- the intra/predictive quantization parameter corresponds to the quantization step size used for coding,
- determining the intra/predictive complexity comprises multiplying the common intra/predictive coding parameters,
- determining the generalized quantization parameter comprises averaging over all coded pictures the quantization parameters used and
- determining the intra/predictive scaling factor comprises dividing the intra/predictive complexity by the base complexity.

8. Method according to claim 7, wherein

- determining the generalized quantization parameter comprises diminishing it by a value which dependents on the number of temporal levels and
- determining the intra/predictive weighting factor comprises limiting its value range to the range from 2 to 10.

9. Encoder for coding a sequence of pictures, the encoder comprising

- means for decomposing the sequence into a preceding group of pictures and a subsequent group of pictures
- means for decomposing a group of pictures into at least two levels, a base level and one or more enhanced levels,
- means for coding a group of pictures by help of one or more enhanced level weighting factors,
- means for determining picture dependent coding parameters from coding of a picture,
- means for determining a base complexity by help of coding parameters determined from base level pictures of a group of pictures and one or more enhanced complexities by help of the coding parameters determined from enhanced temporal level pictures of the same group of pictures and
- means for updating the enhanced level weighting factors by help of the determined complexities.

10. Encoder according to claim 9, **characterized in that**

- the picture dependent coding parameters comprise the number of bits and the quantization step size used for coding of the picture and
- the complexity determining means are adapted to form an level dependent average over the product of the picture dependent coding parameters.

11. Encoder according to any of the claims 9 or 10, wherein

- the coding means are adapted to encoder pictures either bidirectional or intra/predictive,
- the coding means are further adapted to code pictures which are to be coded intra/predictive with common intra/predictive coding parameters,
- the complexity determining means are adapted to determine an intra/predictive complexity, also,
- the encoder comprises means for determining a generalized quantization parameter,
- the complexity determining means are adapted to determine an intra/predictive weighting factor by help of an intra/predictive quantization parameter and the generalized quantization parameter,

- the updating means are adapted to determine an intra/predictive scaling factor by help of the intra/predictive complexity and the base complexity,
- the updating means are further adapted to scale the intra/predictive weighting factor by the intra/predictive scaling factor.

Figure 1 – Prior Art

**European Patent Office**

**EUROPEAN SEARCH REPORT**

Application Number

EP 07 30 1520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/234145 A1 (YATABE YUSUKE [JP] ET AL) 25 November 2004 (2004-11-25) | 1,11 | INV. H04N7/26 |
| A | * abstract * <br> * paragraphs [0018], [0021], [0022], [0024] - [0026] * <br> * figure 3 * <br> * claims 1-6 * | 1-11 | |
| X | WO 2006/119436 A (QUALCOMM INC [US]; CHEN PEISONG [US]; TIAN TAO [US]; RAVEENDRAN VIJAYA) 9 November 2006 (2006-11-09) | 1 | |
| A | * paragraphs [0009], [0038] - [0041], [0043], [0044], [0063] - [0066] * | 1-11 | |
| A | WO 2007/047271 A (THOMSON LICENSING [FR]; PANDIT PURVIN BIBHAS [US]; BOYCE JILL MACDONAL) 26 April 2007 (2007-04-26) <br> * abstract * <br> * paragraphs [0007], [0047] * | 1-11 | |

TECHNICAL FIELDS
SEARCHED    (IPC)

H04N

The present search report has been drawn up for all claims

| Place of search | Date of completion of the search | Examiner |
|---|---|---|
| Munich | 2 June 2008 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 30 1520

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2008

| Patent document cited in search report | | Publication date | Patent family member(s) | | Publication date |
|---|---|---|---|---|---|
| US 2004234145 | A1 | 25-11-2004 | CN | 1551634 A | 01-12-2004 |
| | | | CN | 1874513 A | 06-12-2006 |
| | | | CN | 101018328 A | 15-08-2007 |
| | | | CN | 1917640 A | 21-02-2007 |
| | | | JP | 2004343576 A | 02-12-2004 |
| | | | US | 2008111897 A1 | 15-05-2008 |
| WO 2006119436 | A | 09-11-2006 | EP | 1884027 A2 | 06-02-2008 |
| | | | KR | 20080015831 A | 20-02-2008 |
| WO 2007047271 | A | 26-04-2007 | NONE | | |

EPO FORM P0459

For more details about this annex : see Official Journal of the European Patent Office, No. 12/82